# FASCICULE DE BREVET EUROPEEN

(11) **EP 0 549 390 B1**
(45) Date de publication et mention de la délivrance du brevet: **05.03.1997**
(21) Numéro de dépôt: 92403278.2
(22) Date de dépôt: 04.12.1992
(51) Int. Cl.: F16K 5/20

(54) **Vanne à joint rétractable à double élasticité**
Kugelhahn mit zurücknehmbarer Dichtung
Ball valve with retractable sealing

(30) Priorité: 27.12.1991 FR 9116263
(43) Date de publication de la demande: 30.06.1993
(73) Titulaire: SOCIETE EUROPEENNE DE PROPULSION, 92150 Suresnes (FR)
(72) Inventeur: Garceau, Patrick, F-27950 St Marcel (FR)
(74) Mandataire: Thévenet, Jean-Bruno

(56) Documents cités:
- FR-A- 2 202 572
- FR-A- 2 330 932
- US-A- 4 676 480
- US-A- 4 738 431

## Description

### Domaine de l'invention

La présente invention concerne une vanne du type boisseau munie d'un dispositif d'étanchéité rétractable et destinée à permettre l'interruption d'un fluide circulant dans une canalisation notamment dans un environnement cryotechnique.

### Art antérieur

Dans les dispositifs classiques, l'étanchéité entre le boisseau et le corps de vanne est assurée par un joint qui coopère en permanence avec ces deux éléments quelle que soit la position de la vanne. Toutefois, cette configuration présente le défaut de solliciter de façon continuelle le joint, ce qui a pour conséquence d'entraîner une usure prématurée de celui-ci.

Pour remédier à cela, le document US-A-4 676 480 décrit une vanne dans laquelle l'obturateur est associé à des moyens de rétraction de joint disposés à la fois en amont et en aval de cet obturateur et destinés tant à produire des efforts de rétraction que d'étanchéité. Cette réalisation présente l'avantage de libérer totalement l'obturateur de tout frottement, sauf sur une faible course au voisinage de la fermeture. Cependant il en résulte un ensemble complexe, présentant un encombrement important et qui nécessite le recours à de très lourdes manipulations lorsqu'il s'agit notamment d'effectuer la dépose de l'obturateur.

### Objet et description succincte de l'invention

La présente invention vise à remédier aux inconvénients précités et à réaliser une vanne à joint rétractable dont les moyens de rétraction de joint se présentent sous un volume réduit et néanmoins autorisent des efforts de contact très importants, tout en offrant une facilité de montage et d'ajustage.

Ces buts sont atteints grâce à une vanne à obturateur à joint rétractable, telle que décrite dans la revendication 1, du type comprenant un corps de vanne définissant une section de conduit amont et une section de conduit aval, un obturateur sphérique présentant une ouverture calibrée et se déplaçant d'une position d'ouverture à une position de fermeture et vice-versa, des moyens d'étanchéité fixés sur le corps de vanne et comportant notamment un joint d'étanchéité pour assurer en position fermée de l'obturateur une étanchéité entre l'obturateur et ce corps de vanne, et un tiroir pour faire passer ces moyens d'étanchéité d'une position de retrait qui est aussi celle de repos dans laquelle ils sont écartés de l'obturateur sphérique à une position de contact dans laquelle le joint d'étanchéité est pressé contre l'obturateur.

Conformément à l'invention, la vanne comporte un premier élément élastique de faible raideur qui, lorsque la vanne est amenée en position d'ouverture, tend à séparer les moyens d'étanchéité de l'obturateur et un second élément élastique de relativement forte raideur qui, quelques degrés avant la position de fermeture mécanique de la vanne lorsque le joint d'étanchéité est en contact avec l'obturateur, est mis sous tension par l'intermédiaire du tiroir et exerce une pression contrôlée sur ce joint d'étanchéité en contact avec l'obturateur.

Le dispositif ainsi créé permet dans un minimum de volume et avec un gain de masse appréciable de générer un effort de fermeture de joint qui soit important et dont la valeur peut être réglée facilement en jouant sur les positions relatives du tiroir et des moyens d'étanchéité, au niveau de leur solidarisation.

Selon un premier mode de réalisation, les moyens d'étanchéité comportent un support de joint recevant le joint annulaire et relié au corps de vanne par le premier élément élastique de faible raideur dont l'action dans le sens longitudinal des conduits amont et aval tend à séparer le joint de l'obturateur et qui en même temps assure l'étanchéité entre le support de joint et le corps de vanne.

Avantageusement, le second élément élastique de forte raideur est intégré au tiroir. Dans ce cas, le tiroir peut comporter un premier anneau prolongé axialement par deux bras élastiques de relativement forte raideur disposés dans le sens longitudinal des conduits amont et aval de part et d'autre du boisseau et dont les extrémités libres se terminent par des crochets, les faces internes de ces crochets étant destinées à coopérer avec l'extrémité arrière du support de joint.

Typiquement, le support de joint est muni d'encoches destinées à coopérer avec les crochets pour former un montage du type à baïonnette destiné à permettre l'action du tiroir sur le support de joint.

Selon une variante de réalisation, le tiroir peut comporter un premier anneau prolongé axialement par deux bras élastiques de relativement forte raideur disposés dans le sens longitudinal des conduits amont et aval de part et d'autre du boisseau et dont les extrémités libres sont reliées à un second anneau présentant une partie interne filetée destinée à coopérer avec une partie externe filetée du support de joint.

Les bras élastiques du tiroir peuvent comprendre des fentes qui s'étendent sensiblement parallèlement à l'axe d'un arbre d'entraînement en rotation de l'obturateur sphérique et débouchent alternativement du côté des arètes inférieure et supérieure des bras.

A titre de variante, les bras élastiques du tiroir peuvent comprendre des ondulations en forme de gaufrage.

L'association des moyens d'étanchéité avec le tiroir qui peut se traduire par une liaison fixe ou un simple contact, et la mise en oeuvre d'éléments élastiques intégrés de raideurs différentes, évite le recours aux moyens traditionnels élastiques disposés en amont et en aval de l'obturateur et permet ainsi la réalisation de vannes de meilleure compacité.

Selon un autre mode réalisation, les moyens d'étanchéité comportent un support de joint recevant le joint annulaire et relié au corps de vanne par le premier élément élastique de faible raideur, le second élément élastique de relativement forte raideur étant constitué par un ressort à boudin disposé entre le support de joint et des crochets formés aux extrémités libres de deux bras du tiroir disposés dans le sens longitudinal des conduits amont et aval.

Le premier élément élastique, peut être un soufflet élastique dont l'action dans le sens longitudinal des conduits amont et aval tend à séparer le joint de l'obturateur et qui en même temps assure l'étanchéité entre le porte-joint et le corps de vanne.

Selon un autre mode de réalisation, les moyens d'étanchéité comportent un support de joint recevant le joint annulaire et relié à une bague de liaison par le second élément élastique de relativement forte raideur, le premier élément élastique de faible raideur reliant le corps de vanne à cette bague de liaison destinée à coopérer avec le tiroir.

Le second élément élastique lorsqu'il est distinct du tiroir, peut être un soufflet élastique comprimable dans le sens longitudinal des conduits amont et aval, ou bien peut être constitué d'un soufflet élastique de faible raideur sur lequel est monté en parallèle un ressort à boudin, l'ensemble constituant l'élément élastique de relativement forte raideur. Dans le même temps, le soufflet élastique contribue à assurer l'étanchéité entre le support de joint et le corps de vanne.

Les soufflets élastiques coopérant avec une même bague de liaison peuvent être constitués d'un soufflet usiné monobloc comportant deux éléments de raideur différente.

Cette réalisation qui permet d'intégrer les deux éléments élastiques sur un même composant élargit la gamme des possibilités de réglage en déplacement et en effort et permet ainsi une meilleure optimisation du dispositif selon la qualité de l'étanchéité recherchée.

Plus précisément, quand l'obturateur est déplacé de sa position d'ouverture à sa position de fermeture par rotation d'un arbre d'entraînement, au moins une came solidaire de cet obturateur vient en contact par son extrémité avec une face interne de l'anneau du tiroir pour déplacer celui-ci dans un sens longitudinal aux conduits amont et aval, étirer le premier élément élastique et venir presser le joint d'étanchéité contre l'obturateur grâce à l'action du second élément élastique tandis que lorsque l'obturateur est déplacé de sa position de fermeture à sa position d'ouverture, la ou les cames en perdant le contact avec l'anneau provoquent le retrait du joint de l'obturateur sous l'effet du retour du premier élément élastique dans sa position de repos initiale.

Le déplacement du tiroir peut aussi être obtenu par au moins un galet monté sur des portées excentrées de l'arbre d'entraînement.

Le corps de vanne peut comporter une fenêtre plane et perpendiculaire à l'axe de l'arbre d'entraînement en rotation de l'obturateur afin de permettre l'extraction du boisseau sans dépose de la vanne.

Cette configuration particulière de la vanne selon l'invention est particulièrement avantageuse dans la mesure où des opérations de maintenance, d'inspection ou de réparation, en particulier le remplacement des pièces d'usure, peuvent être effectuées dans la position pleine ouverture de la vanne, sans qu'il soit nécessaire de déposer la vanne de sa ligne, dès lors qu'aucun contact n'entrave le mouvement du boisseau.

### Brève description des dessins

D'autres caractéristiques et avantages ressortiront mieux à la lecture de la description qui va suivre, qui sera faite en référence aux dessins annexés sur lesquels :
- la figure 1 est une vue schématique en coupe axiale d'une vanne en position d'ouverture selon l'invention,
- la figure 2 est une demi vue schématique en coupe axiale d'une vanne en position de fermeture selon l'invention,
- la figure 3 est une vue en perspective d'un premier exemple de réalisation du tiroir applicable à une vanne selon l'invention,
- la figure 3a est une vue partielle d'une variante de réalisation d'un élément élastique faisant partie du tiroir applicable à une vanne selon l'invention,
- la figure 4 est une vue en coupe selon le plan IV-IV de la figure 2 montrant une fenêtre d'extraction de l'obturateur,
- la figure 5 est une vue en perspective d'un second exemple de réalisation du tiroir d'une vanne selon l'invention,
- la figure 6 est une vue schématique en coupe axiale d'une vanne à joint rétractable à double élasticité selon l'invention,
- la figure 7 et les figures 7a à 7c sont des vues en coupe partielle du tiroir et du soufflet d'une vanne selon plusieurs variantes de réalisation possibles,
- la figure 8 est une vue schématique en coupe axiale d'une vanne, en position d'ouverture, selon un second mode de réalisation de l'invention, et
- la figure 9 est une vue schématique en coupe axiale d'une vanne, selon le second mode de réalisation de la figure 8, mais placée en position de fermeture.

### Description détaillée de modes particuliers de réalisation

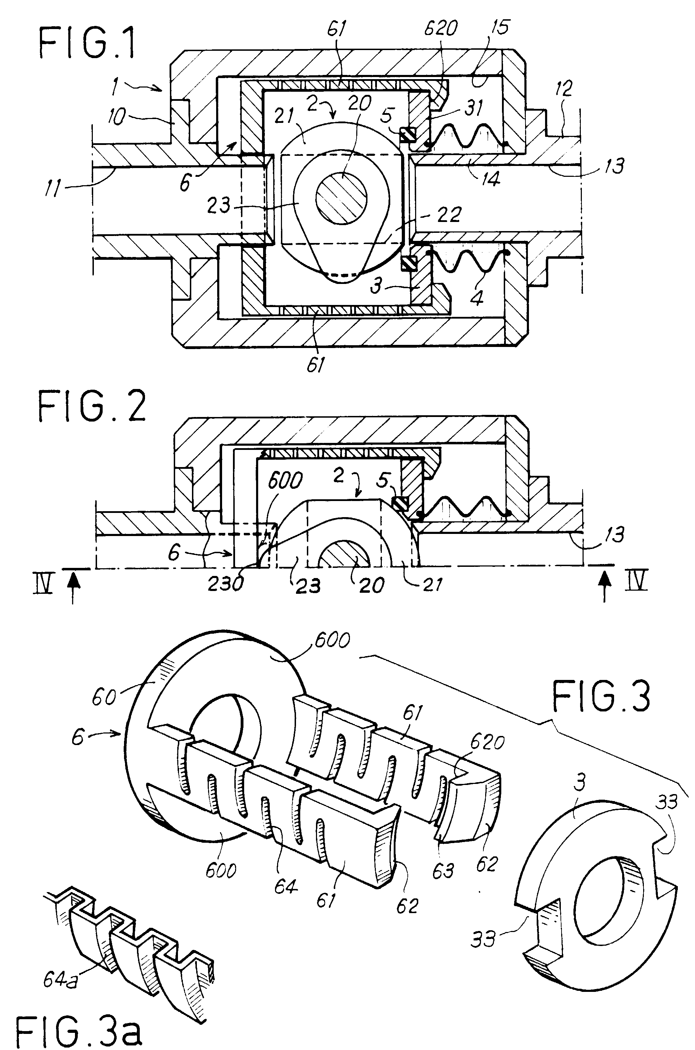

Il peut être observé sur les figures 1 et 2 un premier exemple de réalisation d'une vanne à joint rétractable à double élasticité conforme à l'invention, comprenant un corps de vanne 1 avec une première partie 10 définissant un conduit amont 11 et une seconde partie 12 définissant un conduit aval 13. Un obturateur 2 solidaire d'un arbre d'entraînement 20 comprend un boisseau sphérique 21 interposé entre le conduit amont 10 et le conduit aval 13 pour assurer dans une position de fermeture représentée à la figure 2, une interruption de la communication entre les conduits amont et aval. Par rotation de l'arbre d'entraînement 20, le boisseau 21 peut être amené dans une position d'ouverture dans laquelle un orifice central calibré 22 assure une communication entre les conduits amont et aval.

La deuxième partie 12 du corps de vanne 1 présente une paroi cylindrique 14 qui forme une séparation entre le conduit aval 13 et une cavité annulaire 15 coaxiale au conduit aval 13 et formée dans le corps de vanne 1, dans laquelle sont disposés un support de joint 3 et un soufflet élastique 4 reliant ce support de joint 3 au fond de la cavité 15 du corps de vanne 1. Le soufflet élastique 4, qui tend à éloigner du boisseau 2 le support de joint 3, est coaxial au conduit aval 13 et peut être étiré dans le sens longitudinal lorsque le support de joint 3 est déplacé vers l'obturateur 2.

Un joint annulaire 5 disposé dans le support de joint 3 assure avec le soufflet élastique 4 l'étanchéité entre le corps de vanne 1 et l'obturateur 2 lorsqu'il est en contact avec le boisseau 21, comme représenté dans la position de fermeture de la figure 2.

Le joint 5 est amené en contact avec le boisseau 21 par l'intermédiaire d'un organe de traction ou tiroir 6 se déplaçant dans la cavité annulaire 15 sous l'action d'au moins une came 23 solidaire de l'arbre d'entraînement 20 et du boisseau 21.

Il doit être noté que le rôle de cette came peut également être rempli par un galet monté sur des parties excentrées de l'arbre d'entraînement comme cela sera décrit plus avant.

La figure 3 est une vue en perspective du tiroir 6 et du support de joint 3. Le tiroir 6 se présente sous une forme cylindrique et comporte un premier anneau 60 qui est prolongé axialement par deux bras élastiques 61 disposés de façon diamétralement opposées par rapport au boisseau 21 et dont les extrémités libres se terminent par des crochets 62, formés par des parois rentrantes dirigées perpendiculairement vers l'axe de l'anneau 60. Le support de joint 3 comporte avantageusement deux encoches 33 afin de faciliter le retrait du tiroir selon l'axe de la vanne, ces encoches 33 et les crochets 62 permettant ensemble un montage de type baïonnette entre le tiroir 6 et le support de joint 3.

L'élasticité des bras 61 peut être obtenue par la réalisation de fentes 64 s'étendant sensiblement parallèlement à l'axe de l'arbre 20 et débouchant alternativement du côté des arètes inférieure et supérieure des bras 61. Toutefois il est possible pour améliorer la capacité d'allongement ainsi que l'effort disponible d'obtenir cette élasticité par des ondulations 64a en forme de gaufrage et pouvant être réalisées par usinage comme représenté sur la figure 3a. Dans tous les cas, ces bras élastiques 61 sont réalisés avantageusement dans un matériau "à ressort".

Le guidage du tiroir 6 peut être réalisé selon deux moyens simples. Le premier qui est par exemple représenté sur les figures 1 à 7 est un guidage par l'intérieur , par glissement avec large jeu du support de joint 3 sur l'extérieur du conduit aval 13, et par glissement de l'anneau 60 qui dévient un disque alésé, sur l'extérieur du conduit amont 11. De plus le support de joint 3 doit être ajusté dans le diamètre intérieur du tiroir 6 et venir au contact des bras 61 ou bien encore être solidarisé avec ces bras comme il sera montré plus avant.

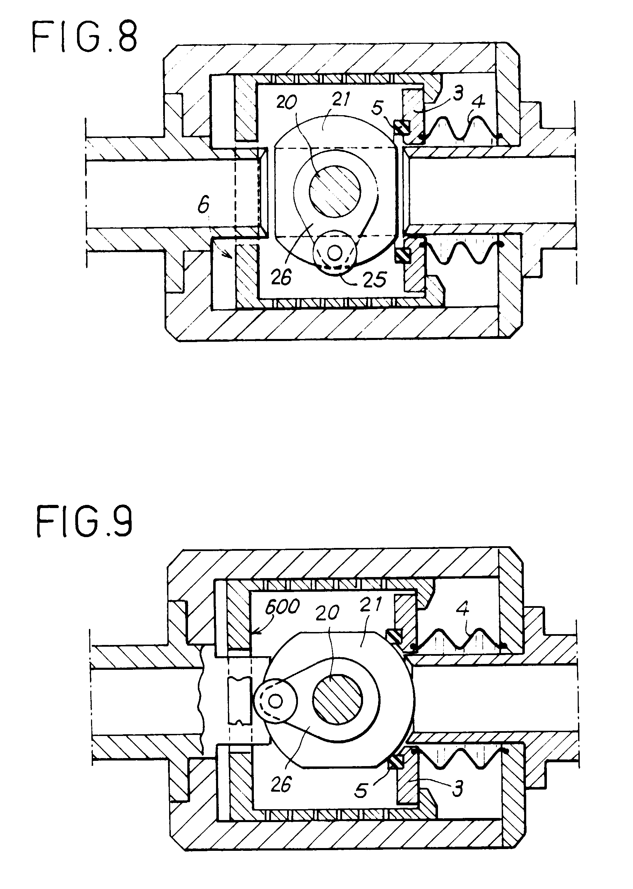

Le second moyen représenté par exemple aux figures 8 et 9 consiste en un guidage par l'extérieur, par glissement du diamètre extérieur du tiroir 6, muni éventuellement de cannelures longitudinales, à l'intérieur du corps de vanne 1. Il doit être noté que dans ce cas, le diamètre intérieur de l'anneau 60 peut être supérieur au diamètre extérieur du conduit amont 11, son dimensionnement étant déterminé pour permettre l'appui de la ou des cames 23.

Quel que soit le montage envisagé, il doit être prévu un jeu entre le support de joint 3 et l'extérieur du conduit aval 13, s'il existe, afin de permettre un auto-centrage du joint 5 sur le boisseau 21.

Si l'on se réfère de nouveau à la figure 1, on voit que dans la position d'ouverture de la vanne, la came 23 n'est pas en contact avec le tiroir 6 et le joint 5 est en position de retrait du fait de l'absence d'action de ce tiroir 6 sur le support de joint 3 et donc sur le soufflet élastique 4 qui se trouve alors dans sa position de repos, seule une face interne 620 des crochets 62 du tiroir 6 vient porter sur une extrémité annulaire arrière 31 du support de joint 3. Aucun contact ne vient empêcher le mouvement du boisseau 21 qui peut alors être très simplement retiré, par le haut ou par le bas, sans qu'il soit nécessaire de déposer la vanne de sa ligne.

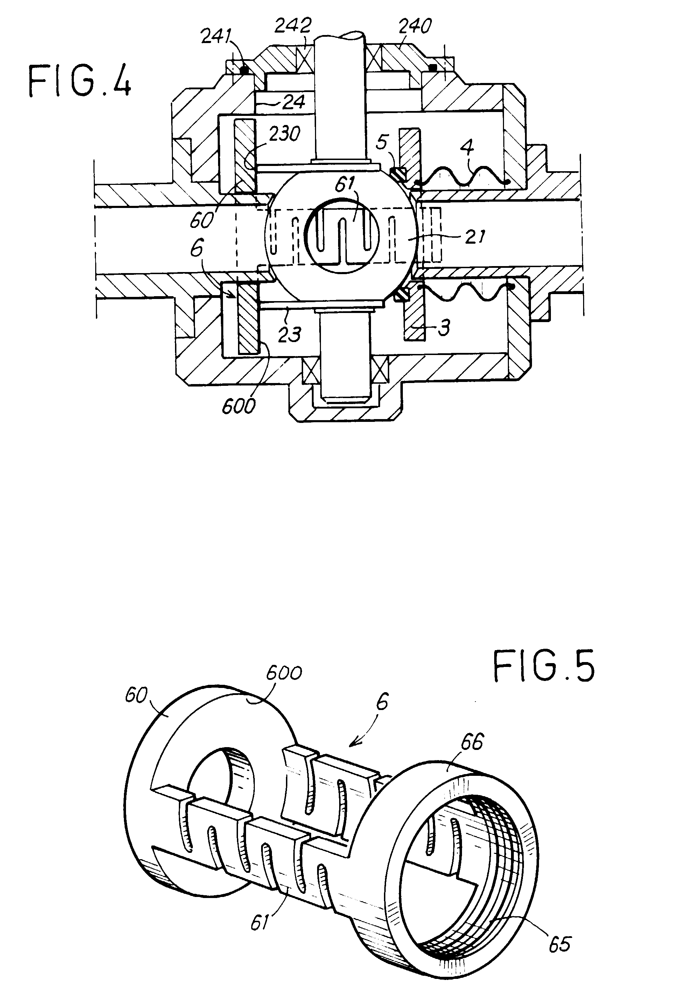

La figure 4 représente une coupe selon l'axe IV-IV de la figure 1 montrant une fenêtre 24 d'extraction de l'obturateur 2.

Le retrait du boisseau 21 est effectué au travers de la fenêtre 24, plane et perpendiculaire à l'axe du boisseau, disposée au sommet d'un bossage du corps de vanne 1. Cette fenêtre 24 est fermée par un couvercle 240 doté d'un organe d'étanchéité 241 et d'un palier 242 pour l'arbre du boisseau 21. Selon les configurations mises en oeuvre, cette fenêtre sera plus ou moins large selon qu'il s'agira d'ôter le boisseau seul ou bien également le tiroir. Des opérations de maintenance, d'inspection ou de réparation peuvent ainsi être réalisées "in situ", sans dépose de la vanne et en particulier le remplacement de pièces usagées, comme les éléments fonctionnels d'étanchéité par exemple.

Lorsque la vanne est placée en position de fermeture par rotation de l'arbre d'entraînement 20 de l'obturateur 2, la came 23 solidaire de cet obturateur est également entraînée en rotation et son extrémité 230 vient alors appuyer sur une face interne 600 du premier anneau 60 du tiroir 6. Sous l'action de cette came 23, le tiroir 6 entre en action c'est à dire est déplacé longitudinalement, de l'aval vers l'amont, entraînant dans son déplacement le support de joint 3 et donc le joint 5 qui se rapproche ainsi du boisseau 21.

Le réglage de la course est déterminée pour que le contact entre le joint et le boisseau soit effectif quelques degrés avant d'atteindre la position de fermeture mécanique, ces derniers degrés de rotation provoquant alors l'étirement des bras élastiques 61 du tiroir 6. Il peut être noté que l'effort appliqué par ce tiroir 6 sur le joint 5 peut être ajusté par interposition d'une cale d'épaisseur déterminée soit entre le tiroir 6 et l'extrémité de la came 23 soit entre ce tiroir 6 et le support de joint 3 au niveau de son extrémité arrière 31. La nécessité de recourir, dans les vannes classiques, à des moyens élastiques disposés en amont et en aval est supprimée, ce qui entraîne une meilleure compacité du dispositif selon l'invention c'est à dire à la fois un gain en masse et en encombrement.

La figure 5 représente une variante de réalisation du tiroir 6. Dans cette réalisation, la liaison entre le support de joint 3 et ce tiroir 6 est fixe et réalisée par filetage. Il doit être noté qu'il est également possible de réaliser cette liaison fixe par baïonnette ou tout simplement par soudure. Toutefois, la liaison filetée présente l'avantage de permettre un réglage fin de la rétraction du joint en position d'ouverture et un ajustage de l'effort de contact en position de fermeture. Dans le cadre de cette liaison, le support de joint 3 est muni d'un premier filetage 32 qui coopère avec un second filetage 65 du tiroir 6. Ce second filetage 65 est réalisé à l'intérieur du second anneau 66, qui est placé à l'extrémité libre des bras élastiques 61, et se trouve parallèle et concentrique au premier anneau de même diamètre 60 (en remplacement des crochets 62).

Le montage ou le démontage de l'obturateur 2 et du tiroir 6 dans le corps de la vanne 1 peuvent être réalisés de plusieurs manières. Ainsi, on peut agir selon l'axe de la vanne en ôtant la partie aval de la vanne ainsi que l'arbre de l'obturateur puis en introduisant ou en retirant le tiroir 6 et le boisseau 21, ce dernier restant inclus dans le tiroir. On peut également agir perpendiculairement à l'axe de la vanne par introduction du tiroir et du boisseau, le corps de vanne 1 devant alors posséder de larges dégagements tel que la fenêtre 24 décrite précédemment. Pour introduire le boisseau 21 dans le tiroir 6 perpendiculairement à l'axe de la vanne, il est nécessaire que le diamètre intérieur du tiroir soit supérieur au diamètre extérieur du boisseau, d'une valeur qui tienne compte de la largeur des bras 61, alors que dans le cas d'une introduction du boisseau 21 dans le tiroir 6 selon l'axe de la vanne, il est nécessaire que les diamètres intérieurs des anneaux soient supérieurs au diamètre extérieur du boisseau.

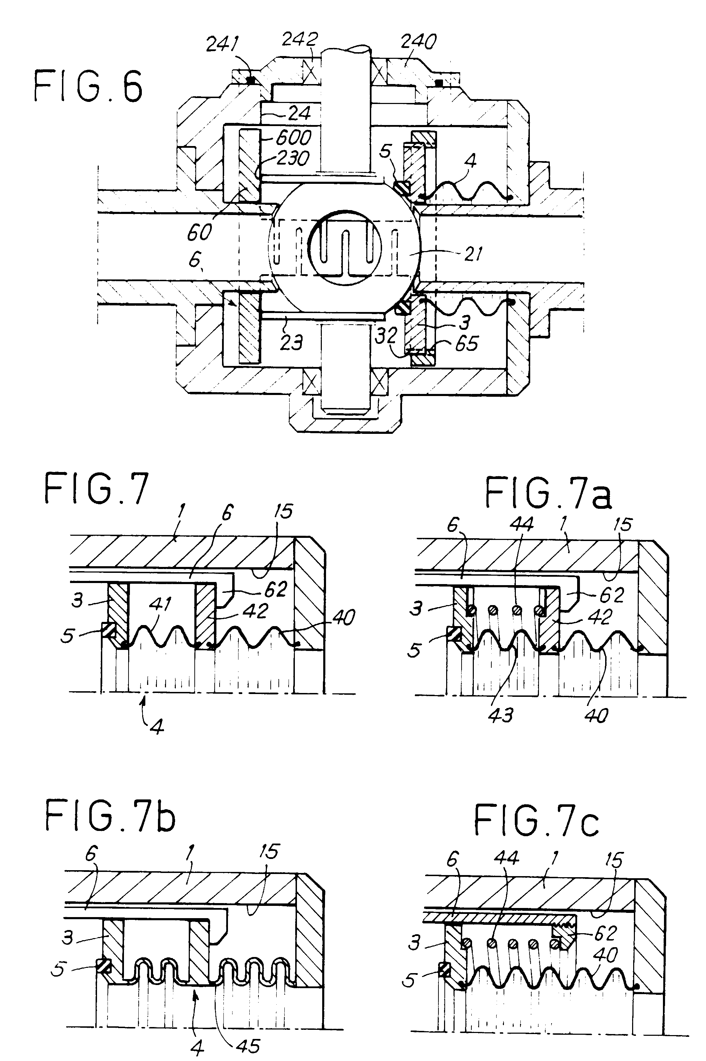

Le fonctionnement du tiroir 6, dans cette variante de réalisation, sera décrit au regard de la figure 6 qui est une vue schématique en coupe axiale d'une vanne, selon l'invention, dans une position de fermeture ou quasi-fermeture. Deux cames 23 disposées de part et d'autre du boisseau 21 et solidaires de celui-ci sont en appui par leur extrémité 230 contre la face interne 600 du premier anneau 60 du tiroir 6, le joint 5 étant en contact avec le boisseau 21. Lorsque la vanne est placée en position d'ouverture par la rotation de l'arbre d'entraînement 20, l'extrémité 230 de la came 23 perd le contact avec la face interne 600 du premier anneau 60. Sous l'action de l'énergie emmagasinée par le soufflet 4, le support de joint 3 est déplacé longitudinalement, de l'amont vers l'aval, entraînant avec lui, de par la liaison filetée 32,65, le tiroir 6. Le joint 5 est dégagé du boisseau 21 et le soufflet 4 se trouve au repos dans une position rétractée.

La figure 7 présente encore une autre variante de réalisation du tiroir 6 dont la partie centrale élastique est reportée au niveau du soufflet 4 qui se compose donc maintenant de deux éléments élastiques 40 et 41 de raideurs différentes, le tiroir 6 étant alors rigide. Comme pour les modes de réalisation précédents, le soufflet 4 est coaxial au conduit aval 13, non représenté, et relie le support de joint 3 au fond de la cavité annulaire 15 du corps de vanne 1. Le soufflet 4 comporte un premier élément élastique 40 de faible raideur reliant le fond de la cavité 15 à une bague de liaison 42, laquelle est reliée par un second élément élastique 41 de relativement forte raideur au support de joint 3. La liaison avec le tiroir 6 est maintenant réalisée au niveau de la bague 42 et peut comme précédemment être réalisée par liaison filetée, par soudure, par liaison baïonnette, éventuellement, comme représenté sur la figure 7, par simple contact.

Dans ce dernier cas, il est avantageux que la bague 42 comporte au moins deux encoches pour permettre le passage des crochets 62 du tiroir 6 et ainsi faciliter un montage de ce tiroir selon l'axe de la vanne.

En position d'ouverture de la vanne, les deux éléments élastiques 40 et 41 sont au repos en position de retrait, et le joint 5 n'est pas en contact avec le boisseau 21. En pratique, cela peut correspondre par exemple à un intervalle de 1 mm pour un diamètre de passage de 25 mm. Lorsque la vanne est placée en position de fermeture par rotation de l'arbre d'entraînement 20, les cames 23 viennent s'appuyer sur le tiroir 6 provoquant un déplacement de celui-ci selon l'axe de la vanne, dans le sens aval-amont. Corrélativement , de par la liaison rigide du tiroir 6 avec la bague 42, l'élément élastique 40 s'allonge rapprochant le joint 5 du boisseau 21. Il doit être noté que pendant cette première phase le second élément élastique 41 est inactif et que, comme il a été dit précédemment, le réglage de la course est déterminé pour que le contact entre le joint et le boisseau soit effectif quelques degrés avant que ne soit atteinte la position de fermeture mécanique. A partir de cet instant de contact, le second élément élastique 41 devient actif et se trouve comprimé sous la traction du tiroir 6.

Lors de l'ouverture de la vanne, la rotation des cames 23 libère le tiroir 6 qui est déplacé sous l'effet de l'énergie accumulée par le premier élément élastique 40, lequel reprend sa position initiale de retrait et écarte le joint 5 du boisseau 21. Il peut être noté que cette opération n'est pas instantanée puisque pendant les premiers degrés angulaires le second élément élastique 41 reprenant sa position initiale s'étire permettant une brève poursuite de ce contact.

La figure 7a montre une variante de réalisation du soufflet 4 de la figure 7 dans laquelle les deux soufflets 40 et 43 présentent une raideur de faible valeur identique, le second élément élastique de forte raideur étant réalisé par la mise en parallèle d'un ressort à boudin 44 sur le soufflet élastique 43 reliant le support de joint 3 à la bague de liaison 42. Le ressort à boudin 44 peut être placé, comme représenté sur la figure 7a, à l'extérieur du soufflet élastique 43 mais il pourrait tout aussi bien être placé à l'intérieur de ce soufflet 43. Dans les deux cas, il faudra prévoir des portées de centrage du ressort sur le support de joint 3 et la bague 42 et pour que l'ensemble reste en place il est nécessaire que le soufflet 43 exerce au repos une traction sur le support de joint 3. De même, plusieurs ressorts (au moins trois) pourraient être fixés entre le support de joint et la bague de liaison à la périphérie de ces éléments, reposant sur des picots solidaires de ces éléments.

La figure 7b montre une autre variante de réalisation du soufflet élastique 4 de la figure 7 qui est réalisé sous la forme d'une structure usinée monobloc comportant les deux soufflets de faible 40 et forte raideur 41, la bague de liaison 42 et éventuellement le support de joint 3. Cette réalisation qui permet d'intégrer ces deux raideurs différentes sur un même élément 45 élargit les possibilités de réglage en déplacement et en effort de l'invention et permet selon les besoins une meilleure optimisation du fonctionnement de la vanne.

La figure 7c montre encore une autre variante de réalisation dans laquelle la bague de liaison 42 est supprimée, les crochets 62 agissant donc directement sur le ressort à boudin 44 qui porte également sur le support de joint 3 relié au corps de vanne 1 par le ressort de faible raideur 40. Pour le montage du ressort à boudin, un anneau porte-crochets vissé dans le tiroir 6 ou bien un anneau extérieur amovible vissé sur le support de joint 3 peuvent être simplement mis en oeuvre. Les liaisons vissées permettent le réglage de la tension du ressort 44.

Les figures 8 et 9 montrent un autre mode de réalisation de la vanne à joint rétractable selon l'invention dans laquelle la came 23 est remplacée par un galet 25 monté sur une portée excentrée 26 de l'arbre d'entraînement 20. Le fonctionnement de cet ensemble est identique au dispositif à came, le frottement de l'extrémité 230 de la came 23 sur la face interne 600 du tiroir 6 étant remplacé par le roulement du galet 25 sur cette même face. Il peut être remarqué que comme il a été signalé précédemment le guidage du tiroir y est réalisé par l'extérieur.

Il est évident que cette structure de la vanne avec commande par galet n'est pas spécifique à cette réalisation et pourrait convenir tout aussi bien aux divers modes de réalisation précédemment décrits.

De même, les différentes variantes de réalisation des premier et second éléments élastiques peuvent parfaitement être mise en oeuvre dans ce mode de réalisation des figures 8 et 9.

La vanne à joint rétractable à double élasticité selon l'invention est particulièrement adaptée à une fonction de régulation dans la mesure où, en position d'ouverture, aucun effort parasite ne s'exerce sur l'obturateur ou la tige de commande de l'obturateur. Il est ainsi possible d'ajuster la position de l'obturateur avec un couple réduit et une grande précision sans usure de joints.

La description qui précède a été faite en référence aux figures 1 à 9, sur lesquelles, pour la clarté des explications, on a défini des conduits amont 11 et aval 13, et le joint d'étanchéité 5 a été disposé du côté aval par rapport à l'obturateur sphérique 21. L'invention s'applique cependant de la même manière à des vannes telles que celles représentées sur les figures 1 à 9 pour lesquelles le sens d'écoulement du fluide serait inversé, c'est-à-dire pour lesquelles les conduits 11 à 13 représenteraient respectivement les conduits aval et amont et le joint d'étanchéité 5 serait alors disposé du côté amont par rapport à l'obturateur sphérique 21.

## Revendications

1. Vanne à joint rétractable comprenant :
- un corps de vanne (1) définissant une section de conduit amont (11) et une section de conduit aval (13),
- un obturateur sphérique (2), solidaire d'un arbre d'entraînement (20), supporté dans le corps de vanne entre les sections de conduit amont et aval, présentant une ouverture calibrée et se déplaçant entre une position d'ouverture et une portion de fermeture,
- des moyens d'étanchéité (3,4,5) reliés au corps de vanne et comportant notamment un joint d'étanchéité (5) monté dans un support de joint (3) pour assurer dans la position fermée de l'obturateur une étanchéité entre l'obturateur et le corps de vanne,
- un tiroir (6) monté dans le corps de vanne pour faire passer ces moyens d'étanchéité d'une position de retrait qui est aussi celle de repos dans laquelle ils sont écartés de l'obturateur sphérique à une position de contact dans laquelle le joint est pressé contre l'obturateur, et
- au moins une came (23, 25, 26) solidaire de l'obturateur et entraînée en rotation avec celui-ci pour déplacer le tiroir, caractérisée en ce que :
- lesdits moyens d'étanchéité comportent un premier élément élastique de faible raideur (4,40) qui, lorsque la vanne est amenée en position d'ouverture, tend à séparer le joint d'étanchéité de l'obturateur, et
- le tiroir comporte un second élément élastique de relativement forte raideur (61, 41, 44), qui est mis sous tension quelques degrés avant la position de fermeture mécanique de la vanne, lorsque le joint d'étanchéité vient en contact avec l'obturateur, afin d'exercer une pression contrôlée sur ce joint d'étanchéité en contact avec l'obturateur.

2. Vanne selon la revendication 1, caractérisée en ce que le tiroir comporte un premier anneau (60) prolongé axialement par deux bras élastiques (61) de relativement forte raideur disposés dans le sens longitudinal des conduits amont et aval de part et d'autre de l'obturateur et dont les extrémités libres se terminent par des crochets (62), les faces internes (620) de ces crochets (62) étant destinées à coopérer avec l'extrémité arrière (31) du support de joint (3) qui est relié au corps de vanne (1) par le premier élément élastique (40).

3. Vanne selon la revendication 2, caractérisée en ce que le support de joint (3) est muni d'encoches (33) destinées à coopérer avec les crochets (62) des bras élastiques (61) pour former un montage du type à baïonnette assurant une liaison solidaire entre le tiroir et les moyens d'étanchéité.

4. Vanne selon la revendication 1, caractérisée en ce que le tiroir comporte un premier anneau (60) prolongé axialement par deux bras élastiques (61) de relativement forte raideur disposés dans le sens longitudinal des conduits amont et aval de part et d'autre de l'obturateur et dont les extrémités libres sont reliées à un second anneau (66) présentant une partie interne avantageusement filetée (65) destinée à coopérer avec une partie externe (32) du support de joint (3), le support de joint étant relié au corps de vanne (1) par le premier élément élastique (40).

5. Vanne selon l'une quelconque des revendications 2 à 4, caractérisée en ce que les bras élastiques (61) comprennent des fentes (64) qui s'étendent sensiblement parallèlement à l'axe de l'arbre (20) d'entraînement en rotation de l'obturateur sphérique (2) et débouchent alternativement du côté des arètes inférieure et supérieure des bras (61).

6. Vanne selon l'une quelconque des revendications 2 à 4, caractérisée en ce que les bras élastiques (61) comprennent des ondulations (64a) en forme de gaufrage.

7. Vanne selon la revendication 1, caractérisée en ce que le tiroir comporte un premier anneau (60) prolongé axialement par deux bras (61) disposés dans le sens longitudinal des conduits amont et aval, de part et d'autre de l'obturateur, et dont les extrémités libres se terminent par des crochets (62) agissant sur une première extrémité d'un ressort à boudin (44) constituant un élément élastique de relativement forte raideur et dont l'autre extrémité repose sur le support de joint (3), le support de joint étant relié au corps de vanne (1) par le premier élément élastique de faible raideur (40).

8. Vanne selon la revendication 1, caractérisée en ce que le tiroir comporte un premier anneau (60) prolongé axialement par deux bras (61) disposés dans le sens longitudinal des conduits amont et aval, de part et d'autre de l'obturateur, et dont les extrémités libres se terminent par des crochets (62) agissant sur une bague de liaison (42) reliée au support de joint (3) par un élément élastique de relativement forte raideur (41), cette bague de liaison étant en outre reliée au corps de vanne (1) par le premier élément élastique de faible raideur (40).

9. Vanne selon la revendication 8, caractérisée en ce que le second élément élastique de relativement forte raideur est un soufflet élastique (41) comprimable dans le sens longitudinal des conduits amont et aval (11,13).

10. Vanne selon la revendication 8, caractérisée en ce que le second élément élastique de relativement forte raideur est constitué d'un soufflet élastique de faible raideur (43) sur lequel est monté en parallèle un ressort à boudin (44).

11. Vanne selon la revendication 8, caractérisée en ce que les premier et second éléments élastiques sont constitués d'un soufflet monobloc (45) comportant deux éléments de raideur différente disposés de part et d'autre d'une bague centrale formant la bague de liaison (42), l'élément de relativement forte raideur étant fixé au support de joint (3) et l'élément de faible raideur étant fixé au corps de vanne (1).

12. Vanne selon l'une quelconque des revendications 1 à 11, caractérisée en ce que lorsque l'obturateur (2) est déplacé de sa position d'ouverture à sa position de fermeture par rotation de l'arbre d'entraînement (20), la ou les cames (23) solidaires de cet obturateur viennent en contact par une extrémité (230) avec une face interne (600) de l'anneau (60) pour déplacer celui-ci dans un sens longitudinal des conduits amont et aval (11,13), étirer le premier élément élastique (4;40) et venir presser le joint d'étanchéité (5) contre l'obturateur (2) grâce à l'action du second élément élastique (61,41) tandis que lorsque l'obturateur (2) est déplacé de sa position de fermeture à sa position d'ouverture, la ou les cames (23) en perdant le contact avec l'anneau (60) provoquent le retrait du joint (5) de l'obturateur (2) sous l'effet du retour du premier élément élastique (4;40) dans sa position de repos initiale.

13. Vanne selon la revendication 1, caractérisée en ce que la came comporte au moins un galet (25) monté sur des portées excentrées (26) de l'arbre d'entraînement (20).

14. Vanne selon la revendication 1, caractérisée en ce que le corps de vanne (1) comporte une fenêtre (24) plane et perpendiculaire à l'axe de l'arbre (20) d'entraînement en rotation de l'obturateur (2) afin de permettre l'extraction du boisseau (21) de l'obturateur sans dépose de la vanne.

## Patentansprüche

1. Ventil mit zurückziebarer Dichtung, mit:
- einem Ventilgehäuse (1), das einen stromaufwärtsgelegenen Leitungsabschnitt (11) und einen stromabwärtsgelegenen Leitungsabschnitt (13) bildet,
- einem kugeligen Absperrkörper (2), der mit einer Antriebswelle (20) fest verbunden ist, die im Ventilgehäuse zwischen dem stromaufwärts und stromabwärts gelegenen Leitungsabschnitt gelagert ist, eine kalibrierte Öffnung darbietet und zwischen einer Öffnungslage und einer Schließlage verstellbar ist,
- Dichtungsmitteln (3, 4, 5), die mit dem Ventilgehäuse verbunden sind und insbesondere eine Dichtung (5) aufweisen, die in einem Dichtungsträger (3) abgebracht ist, um in der Schließlage des Absperrkörpers eine Abdichtung zwischen dem Absperrkörper und dem Ventilgehäuse sicherzustellen,
- einen Schieber (6), der im Ventilgehäuse angebracht ist, um diese Dichtungsmittel aus einer zurückgezogenen Lage, die auch die Ruhelage ist, in welcher sie vom kugeligen Absperrkörper entfernt sind, in eine Berührungslage zu überführen, in welcher die Dichtung gegen den Absperrkörper angedrückt ist, und
- einem Nocken (23, 25, 26), der fest mit dem Absperrkörper verbunden ist und zusammen mit diesen zur Drehung angetrieben ist, um den Schieber zu versetzen, dadurch gekennzeichnet, daß
- die genannten Dichtungsmittel ein erstes elastisches Element mit geringer Steifigkeit (4, 40) aufweisen, das, wenn das Ventil in die Öffnungslage verbracht ist, danach trachtet, die Dichtung vom Schließkörper gesondert zu halten, und
- der Schieber ein zweites, elastisches Element mit verhältnismäßig hoher Steifigkeit (61, 41, 44) aufweist, welches um einige Grad vor der mechanischen Schließung des Ventils unter Spannung gesetzt ist, wenn die Dichtung in Berührung mit dem Schließkörper gelangt, um einen kontrollierten Druck auf diese Dichtung auszuüben, die sich in Berührung mit dem Schließkörper befindet.

2. Ventil nach Anspruch 1, dadurch gekennzeichnet, daß der Schieber einen ersten Ring (60) aufweist, der axial durch zwei elastische Arme (61) mit verhältnismäßig hoher Steifigkeit verlängert ist, die in Längsrichtung der stromaufwärts und stromabwärts gelegenen Leitungen beiderseits des Schließkörpers angeordnet sind und deren freie Enden in Haken (62) enden, wobei die Innenflächen (620) dieser Haken (62) dazu bestimmt sind, mit dem hinteren Ende (31) des Dichtungsträges (3) zusammenzuwirken, der mit dem Ventilgehäuse (1) durch das erste elastische Element (40) verbunden ist.

3. Ventil nach Anspruch 2, dadurch gekennzeichnet, daß der Dichtungsträger (3) mit Kerben (33) versehen ist, die dazu bestimmt sind, mit den Haken (62) der elastischen Arme (61) zusammenzuwirken, um eine Bajonettmontage zu bilden, die eine feste Verbindung zwischen dem Schieber und den Dichtungsmitteln herstellt.

4. Ventil nach Anspruch 1, dadurch gekennzeichnet, daß der Schieber einen ersten Ring (60) aufweist, der axial durch zwei elastische Arme (61) mit verhältnismäßig hoher Steifigkeit verlängert ist, die in Längsrichtung der stromaufwärts und stromabwärts gelegenen Leitungen beiderseits des Absperrteiles angeordnet sind und deren freie Enden mit einem zweiten Ring (66) verbunden sind, der einen vorteilhafterweise mit einem Gewinde versehenen Innenteil (65) aufweist, der dazu bestimmt ist, mit einem Außenteil (32) des Dichtungsträgers (3) zusammenzuwirken, wobei der Dichtungsträger mit dem Ventilgehäuse (1) durch das erste elastische Element (40) verbunden ist.

5. Ventil nach irgendeinem der Ansprüche 2 bis 4, dadurch gekennzeichnet, daß die elastischen Arme (61) Schlitze (64) aufweisen, die sich im wesentlichen parallel zur Achse der Drehantriebswelle (20) des kugeligen Absperrkörpers (2) erstrecken und wechselweise von der Seite der oberen und unteren Kante der Arme (61) einmünden.

6. Ventil nach irgendeinem der Ansprüche 2 bis 4, dadurch gekennzeichnet, daß die elastischen Arme (61) Wellungen (64a) in Form einer Gaufrage aufweisen.

7. Ventil nach Anspruch 1, dadurch gekennzeichnet, daß der Schieber einen ersten Ring (60) aufweist, der axial durch zwei Arme (61) verlängert ist, die in Längsrichtung der stromaufwärts und stromabwärts gelegenen Leitungen beiderseits der Absperrkörpers angeordnet sind, und deren freie Enden in Haken (62) enden, die auf das erste Ende einer Schraubenfeder (44) einwirken, die ein elastisches Element mit verhältnismäßig hoher Steifigkeit bildet und deren anderes Ende auf dem Dichtungsträger (3) ruht, wobei der Dichtungsträger mit dem Ventilgehäuse (1) durch das erste elastische Element mit geringer Steifigkeit (40) verbunden ist.

8. Ventil nach Anspruch 1, dadurch gekennzeichnet, daß der Schieber einen ersten Ring (60) aufweist, der axial durch zwei Arme (61) verlängert ist, die in Längsrichtung der stromaufwärts und stromabwärts gelegenen Leitungen beiderseits des Absperrkörpers angeordnet sind und deren freie Enden in Haken (62) enden, die auf einen Verbindungsring (42) einwirken, der mit dem Dichtungsträger (3) durch ein elastisches Element mit verhältnismäßig hoher Steifigkeit (41) verbunden ist, wobei dieser Verbindungsring außerdem mit dem Ventilgehäuse (1) durch das erste elastische Element mit geringer Steifigkeit (40) verbunden ist.

9. Ventil nach Anspruch 8, dadurch gekennzeichnet, daß das zweite elastische Element mit verhältnismäßig hoher Steifigkeit ein elastischer Balgen (41) ist, der in Längsrichtung der stromaufwärts und stromabwärts gelegenen Leitungen (11, 13) zusammendrückbar ist.

10. Ventil nach Anspruch 8, dadurch gekennzeichnet, daß das zweite elastische Element mit verhältnismäßig hoher Steifigkeit von einem elastischen Balgen mit geringer Steifigkeit (43) gebildet ist, auf dem parallel eine Schraubenfeder (44) angebracht ist.

11. Ventil nach Anspruch 8, dadurch gekennzeichnet, daß das erste und zweite elastische Element von einem einstückigen Balgen (45) gebildet sind, der zwei Elemente mit unterschiedlicher Steifigkeit aufweist, die beiderseits eines mittleren Ringes angeordnet sind, der den Verbindungsring(42) bildet, wobei das Element mit verhältnismäßig hoher Steifigkeit am Dichtungsträger (3) und das Element mit verhältnismäßig niedriger Steifigkeit am Ventilgehäuse (1) befestigt ist.

12. Ventil nach irgendeinem der Ansprüche 1 bis 11, dadurch gekennzeichnet, daß, wenn der Absperrkörper (2) durch Drehung der Antriebswelle (20) aus seiner Öffnungslage in seine Schließlage versetzt wird, der oder die Nocken (23), der bzw. die mit diesem Absperrkörper fest verbunden ist bzw. sind, durch ein Ende (230) mit einer inneren Fläche (600) des Ringes (60) in Berührung gelangt bzw. gelangen, um diesen in Längsrichtung der stromaufwärts und stromabwärts gelegenen Leitungen (11, 13) zu versetzen, das erste elastische Element (4; 40) auseinanderzuziehen und dank der Wirkung des zweiten elastischen Elements (61, 41) zum Andrücken der Dichtung (5) gegen den Absperrkörper (2) zu gelangen, während dann, wenn der Absperrkörper (2) aus seiner Schließlage in seine Öffnungslage versetzt wird, der oder die Nocken (23), während er bzw. sie die Berührung mit dem Ring (60) verliert bzw. verlieren, das Zurückziehen der Dichtung (5) vom Absperrkörper (2) unter der Wirkung der Rückkehr des ersten elastischen Elements (4; 40) in seine anfängliche Ruhelage hervorruft bzw. hervorrufen.

13. Ventil nach Anspruch 1, dadurch gekennzeichnet, daß der Nocken mindestens eine Rolle (25) aufweist, die auf exzentrischen Bereichen (26) der Antriebswelle (20) angebracht ist.

14. Ventil nach Anspruch 1, dadurch gekennzeichnet, daß das Ventilgehäuse (1) ein ebenes und zur Achse der Drehantriebswelle (20) des Absperrkörpers (2) senkrechtstehendes Fenster (24) aufweist, um das Herausziehen des Kükens (21) des Absperrkörpers ohne Ausbau des Ventils zu gestatten.

## Claims

1. A retractable-gasket valve comprising:
- a valve body (1) defining an upstream duct segment (11) and a downstream duct segment (13),
- a spherical shutter member (2) integral with a drive shaft (20), supported in the valve body between the segments of upstream and downstream duct, having a calibrated opening and movable between an open position and a closed position,
- sealing means (3, 4, 5) fixed to the valve body and including, in particular, a gasket (5) mounted in a gasket support (3) for providing sealing between the shutter member and the valve body when the shutter member is in its closed position,
- a slide (6) mounted in the valve body for causing said sealing means to pass between a retracted position which is also a rest position in which the sealing means is spaced apart from the spherical shutter member, and a contact position in which the gasket is pressed against the shutter member, and
- at least one cam (23, 25, 26) integral with the shutter member and rotated therewith in order to move the slide, characterized in that:
- said sealing means include a first low stiffness resilient element (4, 40) which, when the valve is brought to its open position tends to separate the gasket from the shutter member, and
- the slide includes a second resilient element of relatively greater stiffness (61, 41, 44) which is put under tension a few degrees before the mechanical closure position of the valve when the gasket is in contact with the shutter member, and which exerts controlled pressure on said gasket in contact with the shutter member.

2. The valve according to claim 1, characterized in that the slide includes a first ring (60) extended axially by two resilient arms (61) of relatively greater stiffness extending in the longitudinal direction of the upstream and downstream ducts and on either side of the shutter member, and having free ends that are terminated by hooks (62), the inside faces (620) of said hooks (62) being designed to co-operate with the rear end (31) of the gasket support (3) which is connected to the valve body (1) by the first resilient element (40).

3. The valve according to claim 2, characterized in that the gasket support (3) is provided with notches (33) for co-operating with the hooks (62) of the resilient arms (61) to form an assembly of the bayonet type for the purpose of securing a fast connection between the slide and the sealing means.

4. The valve according to claim 1, characterized in that the slide includes a first ring (60) which is axially extended by two resilient arms (61) of relatively greater stiffness extending in the longitudinal direction of the upstream and downstream ducts and on either side of the shutter member and having free ends connected to a second ring (66) having an advantageous threaded inside portion (65) designed to co-operate with an outside portion (32) of the gasket support (3), the gasket support being connected to the valve body (1 ) by the first resilient element (40).

5. The valve according to any one of claims 2 to 4, characterized in that the resilient arms (61) include notches (64) extending substantially parallel to the axis of the shaft (20) for rotating the spherical shutter member (2) and opening out alternately into top and bottom edges of the arms (61).

6. The valve according to any one of claims 2 to 4, characterized in that the resilient arms (61) include corrugations (64a) that are crinkled in shape.

7. The valve according to claim 1, characterized in that the slide includes a first ring (60) extended axially by two arms (61) extending in the longitudinal direction of the upstream and downstream ducts and on either side of the shutter member, and having free ends that are terminated by hooks (62) acting on a first end of a coil spring (44) and constituting a resilient element of relatively greater stiffness and the other end of which rests on the gasket support (3), the gasket support being connected to the valve body (1 ) by the first low stiffness resilient element (40).

8. The valve according to claim 1, characterized in that the slide includes a first ring (60) extended axially by two arms (61) extending in the longitudinal direction of the upstream and downstream ducts and on either side of the shutter member, and having free ends that are terminated by hooks (62) acting on a link ring (42) connected to the gasket support (3) by a relatively greater stiffness resilient element (41), said link ring being further connected to the valve body (1) by the first low stiffness resilient element (40).

9. The valve according to claim 8, characterized in that the second resilient element of relatively greater stiffness is a resilient bellows (41) compressible in the longitudinal direction of the upstream and downstream ducts (11, 13).

10. The valve according to claim 8, characterized in that the second resilient element of relatively greater stiffness is constituted by a low stiffness resilient bellows (43) on which a coil spring is mounted in parallel (44).

11. The valve according to claim 8, characterized in that the first and second resilient elements are constituted by a one-piece bellows (45) including two elements of different stiffnesses disposed on either side of a central ring forming the link ring (42), the relatively greater stiffness element being fixed to the gasket support (3) and the low stiffness element being fixed to the valve body (1).

12. The valve according to any one of claims 1 to 11, characterized in that when the shutter member (2) is displaced from its open position to its closed position by rotating a drive shaft (20), the cam(s) secured to said shutter member have an end (230) that comes into contact with an inside face (600) of the ring (60) to move it in a longitudinal direction of the upstream and downstream ducts (11, 13), thereby stretching the first resilient element (4, 40) and causing the gasket (5) to be pressed against the shutter member (2) under drive from the second resilient element (61, 41), whereas when the shutter member is moved from its closed position to its open position, the cam(s) (23), on losing contact with the ring (60), cause the gasket (5) to be retracted from the shutter member under the effect of the first resilient element (4, 40) retuming to its initial, rest position.

13. The valve according to claim 1, characterized in that the cam comprises at least one wheel (25) mounted on eccentric bearings (26) carried by the drive shaft (20).

14. The valve according to claim 1, characterized in that the valve body (1 ) includes a plane window (24) extending perpendicularly to the axis of the drive shaft (20) for rotating the shutter member (2), thereby allowing the ball (21) to be extracted from the shutter member without requiring the valve to be removed.
